# EUROPEAN PATENT SPECIFICATION

(11) **EP 2 799 744 B1**
(45) Date of publication and mention of the grant of the patent: **09.12.2020**
(21) Application number: 12862585.2
(22) Date of filing: 04.10.2012
(51) Int. Cl.: F16K 1/36, F01P 7/16, F16K 1/42, F16K 17/04, F16K 31/68

(54) **FLUID CONTROL VALVE**
FLÜSSIGKEITSREGELVENTIL
SOUPAPE DE COMMANDE DE FLUIDE

(30) Priority: 28.12.2011 JP 2011288643
(43) Date of publication of application: 05.11.2014
(73) Proprietor: Nippon Thermostat Co., Ltd., Kiyose-shi Tokyo 204-0003 (JP)
(72) Inventor: NISHINO, Yoshinori, Tokyo 2040003 (JP); NAKAMURA, Kazuko, Tokyo 2040003 (JP)
(74) Representative: Jannig, Peter
(86) International application number: PCT/JP2012/075769
(87) International publication number: WO 2013/099386

(56) References cited:
- EP-A2- 0 716 367
- DE-A1-102010 034 490
- JP-A- 2001 248 743
- JP-A- 2004 340 275
- JP-A- 2004 340 275
- JP-A- 2009 074 607
- JP-U- 6 010 673
- JP-U- H0 341 123
- JP-U- H0 341 123
- JP-U- H0 564 583
- JP-U- H0 610 673
- JP-U- H0 622 673
- JP-U- S59 101 066
- JP-U- S59 101 066
- JP-U- S62 156 684

## Description

### Technical Field

The present invention relates to an optimal fluid control valve used to control the flow of liquid coolant employed in a thermostat device that is a temperature-sensitive automatic valve used to control the temperature of engine liquid coolant by switching the flow of engine liquid coolant and which is actuated by changes in the temperature of the liquid coolant, in an engine liquid coolant circuit that circulates liquid coolant that cools an internal combustion engine (hereinafter referred to as an engine) used in automobiles or the like between a heat exchanger (hereinafter referred to as a radiator) and the engine.

### Background Art

As a conventional fluid control valve of this type, a thermostat valve used in an automobile engine cooling device like that described in Patent Document 1, for example, is known.

To explain this briefly: Liquid-cooled systems using a radiator are widely used to cool automobile engines. In this type of cooling system, in order to be able to control the temperature of the liquid coolant introduced into the engine, a thermostat valve or the like using a thermal expansion unit that regulates the amount of liquid coolant to be circulated to the radiator has conventionally been used.

A fluid control valve such as the thermostat valve using the thermal expansion unit described above is installed in a part of the liquid coolant passage such as the engine intake or outlet. When the temperature of the liquid coolant is low, the control valve is closed and the liquid coolant is circulated through a bypass without passing through the radiator. When the temperature of the liquid coolant has increased, the control valve is opened and the liquid coolant is circulated through the radiator. Thus, the temperature of the engine liquid coolant can be maintained at the required state.

The thermostat valve described above is typically provided with a thermo-element, in which is enclosed a thermal expansion unit that is actuated by changes in temperature of a fluid, and a frame that acts as a housing that houses the thermo-element. First and second valves, umbrella-shaped, flat, or the like, are provided at both ends of the thermo-element to complete the thermostat device.

The above-described first valve functions as a main valve that controls the flow of liquid coolant from the radiator to the engine, for example, whereas the second valve functions as a secondary valve that becomes the bypass valve that controls the flow of liquid coolant from the bypass to the engine.

The above-described thermo-element is also equipped with a piston as a first valve stem that the thermal expansion unit, which senses the temperature of a fluid, causes to advance and retreat, and in conjunction with this movement of the piston the aforementioned valves open and close the fluid passage (see, for example, Patent Document 1).

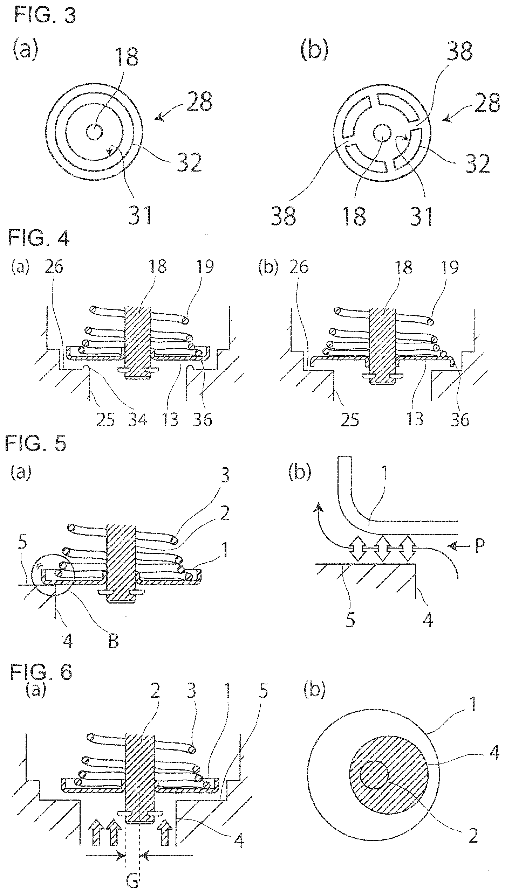

However, for example, as shown in FIG. 5(a), of the first and second valves described above, the second valve 1, which functions as a relief valve, is fitted onto the end of the rod 2 that is the second valve stem and which is biased by a coil spring 3 so as to be elastically supported. The movement of the rod 2 in the axial direction opens and closes a fluid passage 4 comprising and provided along the fluid passage. Note that, in the drawing, reference numeral 5 is a valve seat for the second valve 1.

The reason for this type of construction is that, when the movement of the rod 2 seats the second valve 1 on the valve seat 5 on the rim of the fluid passage 4, the valve can be securely closed.

### Prior Art Documents

### Patent Documents

Patent Document 1: JP-H03-41123-U

Further prior art is disclosed in documents JP 2004 340275 A, JP S62 156684 U, JP S59 101066 U, JP H03 41123 U, JP H06 10673 U, DE 10 2010 034 490 A1, and EP 0 716 367 A2.

### SUMMARY OF THE INVENTION

### Technical Problem

However, with the bypass valve that is the second valve 1 in the fluid control valve used in Patent Document 1 described above, as shown in FIG. 5(b), the valve is made bigger than the fluid passage in order to obtain secure valve closure. As a result, the seat formed by the flat surface of the second valve 1 is wider (has a larger surface area) than the valve seat, thereby extending the length of a constricted portion of the passage formed just before closing or just after opening of the valve (indicated by the reference symbol P in the drawing). The negative pressure generated by the change in speed of the flow of the coolant passing through this constricted portion sometimes caused the second valve 1 to flutter. When this flutter occurs, the device vibrates during operation and this vibration can cause friction with and damage to surrounding parts such as the rod, piston, E-ring, etc., friction with and deformation of the housing, breakage of the coil spring, and noise.

Moreover, with respect to the pressure of the fluid when the second valve 1 is closed, as shown in FIGS. 6(a), 6(b), between the seat formed by the flat surface of the second valve 1 and the fluid passage 4 that is opened and closed as needed by this second valve 1 there occurs an offset in axis by an amount indicated by the reference symbol G and the two are not always coaxial, with the result that the fluid pressure becomes unbalanced and the valve does not open evenly. Once this type of axial offset G occurs, it promotes the fluttering of the second valve 1 described above, upon which the device vibrates during operation and can cause friction with and damage to surrounding parts such as the rod, piston, E-ring, etc., friction with and deformation of the housing, and breakage of the coil spring. Some solution that solves this sort of problem at a stroke has been sought.

The present invention was conceived in light of the circumstances described above and has as its object to provide a fluid control valve with an uncomplicated structure capable of preventing valve flutter, that is, vibration and friction with and damage to surrounding parts such as the rod, piston, E-ring, etc., friction with and deformation of the housing, breakage of the coil spring, and noise caused by this vibration.

### Means of Solving the Problem

To achieve this objective, the present invention (the invention according to claim 1) provides a fluid control valve having a valve supported in a state in which it is biased by a spring against a tip of a valve shaft that moves reciprocally back and forth in a direction orthogonal to a valve seat, wherein a gently sloping annular convex portion) is provided on the portion of the valve which is seated against the valve seat, to minimize the length of a constricted portion of a fluid passage defined by the valve and the valve seat, and wherein a gently sloping concave portion is formed on a part of the valve that is seated against the valve seat to widen an area that receives pressure of a flow of fluid through the fluid control valve, and wherein multiple outwardly radiating grooves are formed in the annular convex portion at predetermined intervals to form a passage that communicates between upstream and downstream sides of the valve.

The fluid control valve (the invention according to claim 2) is the fluid control valve as claimed in claim 1, characterized in that the annular convex portion is configured so that a state of contact between the valve and the valve seat is in the form of a line.

The fluid control valve (the invention according to claim 3) is the fluid control valve as claimed in any of the preceding claims, characterized in that the concave portion is configured to be used as a spring seat for the spring.

### Effects of the Invention

Since the fluid control valve according to the present invention as described above is configured to minimize the length of the constricted portion of the fluid passage defined between the valve and the valve seat upon closing and the like of the valve, the fluid control valve according to the present invention as described above provides the following various superior effects despite having an uncomplicated configuration.

That is, because the length of the constricted portion of the passage defined by the valve and the valve seat is kept to the minimum necessary, the present invention eliminates the negative pressure generated by the change in the speed of the flow of the fluid and is capable of preventing valve flutter, that is, vibration and friction with and damage to surrounding parts such as the rod, piston, E-ring, etc., friction with and deformation of the housing, breakage of the coil spring, and noise caused by this vibration.

In addition, according to the present invention, the pressure distribution during closing of the valve is such that, even when the valve and the valve seat are not coaxial but offset, the contact during seating can be maintained as a line contact, the area that receives the pressure of the fluid becomes uniform, and the valve can operate evenly without increasing the number of parts and without the valve tilting.

In addition, according to the present invention, since the fluid control valve of the present embodiment leaves a minimum essential portion of the valve that is seated against the valve seat and forms a concave portion that broadens the area receiving the pressure of the fluid, the valve receives the pressure evenly without being affected by axial offset or the diameter of the bypass valve opening and can prevent valve flutter, that is, vibration and the friction with and damage to surrounding parts such as the rod, piston, E-ring, etc., friction with and deformation of the housing, breakage of the coil spring, and noise caused by this vibration.

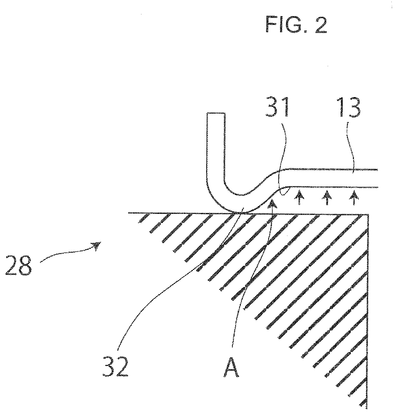

Further, gently sloping the above-described concave portion and the annular convex portion (see part A in FIG. 2) has the same rectifying effect of smoothing the fluid flow as heretofore. In the thermostat valve, gently sloping the annular convex portion has the advantage of smoothing the flow of fluid to the temperature-sensitive portion of the thermostat. In addition, the above-described concave portion can also be used as a spring seat for the coil spring that elastically supports the valve.

The present invention forms multiple outwardly radiating grooves in the annular convex portion at predetermined intervals to form a passage that communicates between upstream and downstream sides of the valve to allow the fluid to leak through even when the second valve (the flat valve) is closed, thereby eliminating any fluctuation in temperature due to the sudden inflow of fluid when the valve is opened and thus improving temperature control and preventing hunting by the bypass valve.

### BRIEF DESCRIPTION OF THE DRAWINGS

FIG. 1 shows an embodiment of a fluid control valve according to the present invention, in which (a) is a schematic sectional view and (b) is an enlarged view of a section A in (a);
FIG. 2 is an enlarged view of an essential portion of the fluid control valve, for illustrating the effect of a concave portion of the valve shown in FIG. 1;
FIG. 3(a) is a schematic bottom plan view of the valve, illustrating an annular convex portion shown in FIG. 1, and (b) shows a variation thereof;
FIGS. 4(a), (b) are sectional views of essential portions of the fluid control valve just after the valve is opened, each showing other embodiments of the fluid control valve according to the present invention;
FIGS. 5(a), (b) are a schematic sectional view and an enlarged view of an essential portion, respectively, illustrating a constricted portion of a conventional valve; and
FIGS. 6(a), 6(b) are a schematic sectional view and an enlarged view of an essential portion, respectively, illustrating an axial offset G in the case of using a conventional valve.

### DETAILED DESCRIPTION OF EMBODIMENTS OF THE INVENTION

In a fluid control valve, the pressure of the fluid is kept substantially uniform during opening and closing of the valve by providing a concave portion, a convex portion, etc., on one of the valve and the valve seat so as to minimize the length of a constricted portion of a fluid passage defined by the valve and the valve seat, thereby preventing valve flutter.

### First Embodiment

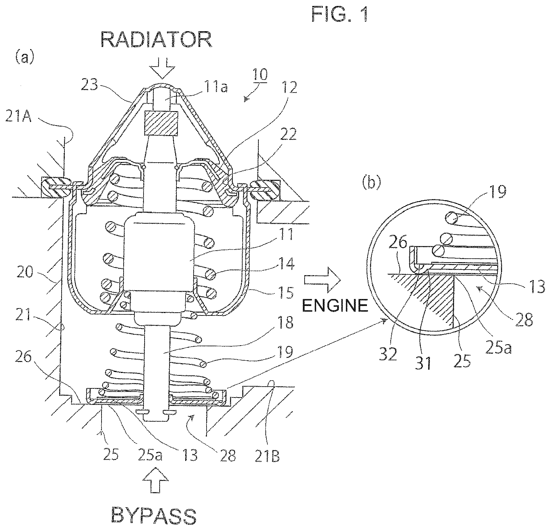

FIG. 1 through FIG. 3 show an embodiment of a fluid control valve according to the present invention.

In these drawings, that which is indicated as a whole by reference numeral 10 is a thermostat device, which is a temperature-sensitive automatic valve, used, for example, in the cooling system of an automobile engine (not shown), mounted at the intersection between a radiator side liquid coolant passage and a bypass on the engine outlet side, used to control the temperature of the liquid coolant at the intake of the engine by selectively switching the flow of the coolant in the fluid passage defined by these passages.

The thermostat device 10, as shown in FIG. 1(a) includes a thermo-element 11 that operates in response to changes in the temperature of a fluid. A substantially umbrella-shaped first valve 12 is fitted to one end (the top in the drawing) of the thermo-element 11, while a substantially flat second valve 13 is fitted to the tip of the valve stem (to be described below) extending toward the other end (the bottom in the drawing), At the center along the axis of the thermo-element 11 is provided a coil spring 14 as a biasing means that biases the first valve 12 toward the closed position, and a frame 15 that also serves to compress the spring is fitted thereto. The frame 15 engages support stands on a valve housing that is a fixed part and which is described later in such as way as to continuously bias the first valve 12 toward the open position against the coil spring 14, while at the same time is a member that slidably supports the thermo-element 11.

The thermo-element 11 has a temperature-sensitive part that encloses a thermal expansion unit of wax or the like that senses the temperature of a fluid and expands or contracts accordingly.

Reference numeral 20 in the drawing is a housing that forms the passage through which flows the liquid coolant that flows in from the radiator that is the fluid intake and outlet to the engine intake, and at the same time contains the thermostat device 10. A valve chamber 21 that contains the thermostat device 10 is formed in the interior of the housing 20, and defines a fluid passage 25 constructed of a liquid coolant passage 21A from the radiator at the top of the drawing and a liquid coolant passage 21B toward the engine at the right in the drawing.

A flange is provided at approximately the center in the long direction of the thermostat device 10, inside which is formed a valve seat 22, opposite the first valve 12 and against which the first valve 12 can be seated. The thermo-element 11 and the frame 15 are assembled in a state in which the valve 12 can be seated against the valve seat 22.

Reference numeral 23 in the drawing is an engagement part that engages the tip of the piston rod 11a. In the state shown in FIG. 1(a), as the piston rod 11a protrudes upward due to the expansion of the thermal expansion unit, the thermo-element 11 and the first valve 12 move downward, the first valve 12 opens accordingly, and liquid coolant from the radiator is conducted into the engine.

At the same time, the second valve 13 having a substantially flat shape is fitted to the bottom of the rod 18 that is the valve shaft and which extends downward from the thermo-element 11 and is engaged by an E-ring or the like, and elastically supported by biasing by a coil spring 19. The fluid passage 25, which is opened and closed by the second valve 13, opens at the bottom of the housing 20, with the rim of the opening 25a forming a valve seat 26.

In the present embodiment, the structure is one in which the second valve 13 is normally seated against the aforementioned valve seat 26, with the second valve 13 functioning as a relief valve that is opened in response to liquid coolant pressure on the bypass side.

In the thermostat device 10 configured as described above, a relief valve 28 as a fluid control valve defined by the second valve 13 and the valve seat 26 has the following configuration.

That is, according to the present invention, the relief valve 28 is configured with the second valve 13 supported in a state in which it is biased by the coil spring 19 against the tip of the rod 18 that moves reciprocally back and forth in a direction orthogonal to the valve seat 26, so as to minimize the length of a constricted portion of a fluid passage defined by the second valve 13 and the valve seat 26 in the fluid control valve 28 that controls the flow of fluid in the fluid passage 25.

In particular, according to the present invention, as shown in FIG. 1(b), FIG. 2, and FIG. 3(a), a concave portion 31 is provided to broaden the area of the passage so as to widen the area that receives the pressure of the fluid, while leaving a minimum essential portion of the second valve 13 that is seated against the valve seat 26.

Further, an annular convex portion 32 is provided on that portion of the valve 13 which is seated against the valve seat 26 and which is continuous with the concave portion 31 to minimize the length of a constricted portion of a fluid passage defined by the opening and closing of the relief valve 28. The annular convex portion 32 is formed in the shape of a projecting hemisphere.

With a configuration such as this, in contrast to the conventional simple valve seating involving two flat planes, the length of the constricted portion is shortened and the negative pressure generated by the change in the speed of the flow of the coolant can be eliminated. In particular, with this configuration, the annular convex portion 34 shapes the state of contact of the valve 13 against the valve seat 26 into a line, thereby obviously keeping the constricted portion to an absolute minimum.

Since the constricted portion of the fluid passage defined by the valve 13 and the valve seat 26 is kept to the essential minimum, the negative pressure generated by the change in the speed of the flow of the coolant is eliminated, thereby preventing valve flutter, that is, vibration and friction with and damage to surrounding parts such as the rod, piston, E-ring, etc., friction with and deformation of the housing, breakage of the coil spring, and noise caused by this vibration during opening and closing of the valve.

In addition, the pressure distribution during closing of the valve 13 is such that, even when the valve 13 and the valve seat 26 are not coaxial but offset, the contact during seating can be maintained as a line contact, the area that receives the pressure of the fluid becomes uniform, and the valve can operate evenly without increasing the number of parts and without the valve tilting. Further, by eliminating the conventional valve flutter, the fluid control valve of the present embodiment prevents vibration and the friction with and damage to surrounding parts such as the rod 18, piston, E-ring, etc., friction with and deformation of the housing, breakage of the coil spring 19, and noise caused by this vibration.

In addition, since the fluid control valve of the present embodiment leaves a minimum essential portion of the second valve 13 that is seated against the valve seat 26 and forms a concave portion 31 that broadens the area receiving the pressure of the fluid, as shown in FIG. 2 and elsewhere, the valve 13 receives the pressure evenly without being affected by axial offset or the diameter of the bypass valve opening and can prevent vibration and the friction with and damage to surrounding parts such as the rod, piston, E-ring, etc., friction with and deformation of the housing, breakage of the coil spring, and noise caused by this vibration.

Further, gently sloping the above-described concave portion 31 and the annular convex portion 32 (see part A in FIG. 2) has the same rectifying effect of smoothing the fluid flow as heretofore. In the thermostat valve 10, gently sloping the annular convex portion 32 has the advantage of smoothing the flow of fluid to the temperature-sensitive portion of the thermostat. In addition, the above-described concave portion 31 can also be used as a spring seat for the coil spring 19 that elastically supports the valve 13.

In the bypass valve of the conventional, known fluid control valve described in Patent Document 1 described above, although the drawings show a configuration providing a projection on the part of the valve that is seated against the valve seat that appears to be similar to the distinctive annular convex portion 32 of the present invention, there is no suggestion whatsoever of such in Patent Document 1, nor is there any suggestion of minimizing the length of the passage at the closure between the valve and the valve seat.

It should be noted that, as shown in FIG. 3(b), multiple outwardly radiating grooves 38 may be formed in the above-described annular convex portion 32 at predetermined intervals to form a passage that communicates between upstream and downstream sides of the valve.

With this sort of configuration, the multiple grooves 38 formed in the annular convex portion 32 allow the fluid to leak through even when the second valve (the flat valve) 13 is closed, thereby eliminating any fluctuation in temperature due to the sudden inflow of fluid when the valve is opened and thus improving temperature control and preventing hunting by the bypass valve 28.

### Second Embodiment

FIGS. 4(a), (b) show other embodiments of the present invention.

More specifically, FIG. 4(a) shows a case in which an annular convex portion 34 is formed as a hemispherical projecting portion formed on the valve seat 26 against which the valve 13 is seated. It can be easily understood that substantially the same effect as with the above-described embodiment can be obtained with this configuration as well.

FIG. 4(b) shows a case in which an annular convex portion 36 is formed on the valve 13 as a bent, L-shaped portion along the rim of the valve 13. It goes without saying that the same effect can be achieved with this configuration as well.

It should be noted that the present invention is not limited to the structure described in the embodiments described above, and accordingly, the shapes and structures of the parts that constitute the thermostat device 10 and moreover the relief valve as the fluid control valve 28 may be modified and changed as convenient.

For example, it is also possible to adopt a thermostat device having a structure in which the first valve 12 is installed closed and the second valve 13 open, the piston 11a projects upward in the drawing due to thermal expansion, the thermo-element 11 and the first and second valves 12 and 13 move downward in FIG. 1(a), and the first valve 12 opens and the second valve 1 closes.

In addition, although in the above-described embodiments the present invention is described with reference to an example using the flat valve 13 as the fluid control valve 28, the present invention is not limited thereto and of course the valve may be any appropriate shape. In short, provided that the tip of the valve is elastically supported by a spring and there is a risk that flutter might occur, the valve may be of any shape or structure.

Further, although in the above-described embodiments the present invention is described with reference to an example of an annular convex portion 32 formed on that portion of the substantially flat second valve 13 which is seated against the valve seat 26, the present invention is not limited thereto and alternatively the convex portion 32 may be triangular, rectangular, pentagonal, hexagonal, octagonal, star-shaped or otherwise multilateral in cross-section.

In addition, although in the above-described embodiments the concave portion 31 and moreover the convex portion 32 is formed on the portion of the valve 13 that is seated against the valve seat so as to minimize the length of the constricted portion of the fluid passage defined by the second valve 13 and the valve seat 26, the present invention is not limited thereto and alternatively a structure may be adopted in which the housing 20 having the valve seat 26 has a shape that reduces the area of the constricted portion, such as the teeth of a gear.

Although the above-described embodiments are described as applied to the fluid control valve 28 installed as a relief valve in a thermostat device 10, the present invention is not limited thereto and is applicable also to a valve device having the sole function of a relief valve.

Although the above-described embodiments describe an example in which the thermostat device 10 is installed on the engine intake side in an engine cooling circuit, the present invention is not limited thereto and it goes without saying that the same effect can be obtained in a case in which the thermostat device 10 is installed on the engine outlet side.

### Reference Numbers

- 10: Thermostat device
- 13: Second valve (flat valve)
- 25: Bypass fluid passage
- 25a: Opening
- 26: Valve seat
- 28: Fluid control valve (relief valve)
- 31: Concave portion
- 32, 34, 36: Convex portion

## Claims

1. A fluid control valve (28) having a valve (13) supported in a state in which it is biased by a spring (19) against a tip of a valve shaft (18) that moves reciprocally back and forth in a direction orthogonal to a valve seat (26),
wherein a gently sloping annular convex portion (32, 34, 36) is provided on the portion of the valve (13) which is seated against the valve seat (26), to minimize the length of a constricted portion of a fluid passage (25) defined by the valve (13) and the valve seat (26), and
wherein a gently sloping concave portion (31) is formed on a part of the valve (13) that is seated against the valve seat (26) to widen an area that receives pressure of a flow of fluid through the fluid control valve (28), and
**characterized in that** multiple outwardly radiating grooves (38) are formed in the annular convex portion (32, 34, 36) at predetermined intervals to form a passage that communicates between upstream and downstream sides of the valve (13).

2. The fluid control valve (28) as claimed in claim 1, **characterized in that** the annular convex portion (32, 34, 36) is configured so that a state of contact between the valve (13) and the valve seat (26) is in the form of a line.

3. The fluid control valve (28) as claimed in any of the preceding claims, **characterized in that** the concave portion (31) is configured to be used as a spring seat for the spring (19).

## Patentansprüche

1. Fluidregelventil (28) mit einem Ventil (13), das in einem Zustand gestützt wird, in dem es durch eine Feder (19) gegen eine Spitze eines Ventilschafts (18), der sich in einer orthogonal zu einem Ventilsitz (26) verlaufenden Richtung hin und her bewegt, vorgespannt wird,
wobei ein ringförmiger konvexer Teil (32, 34, 36) mit sanfter Neigung an dem Teil des Ventils (13) vorgesehen ist, der an dem Ventilsitz (26) anliegt, um die Länge eines eingeschränkten Teils eines durch das Ventil (13) und den Ventilsitz (26) definierten Fluiddurchgangs (25) auf ein Minimum zu reduzieren, und
wobei ein konkaver Teil (31) mit sanfter Neigung an einem Teil des Ventils (13) ausgebildet ist, der an dem Ventilsitz (26) anliegt, um eine Fläche zu verbreitern, die Druck eines Fluidstroms durch das Fluidregelventil (28) aufnimmt, und **dadurch gekennzeichnet, dass**
mehrere sich radial nach außen erstreckende Nuten (38) in vorbestimmten Abständen in dem ringförmigen konvexen Teil (32, 34, 36) ausgebildet sind, um einen Durchgang zu bilden, der zwischen einer stromaufwärtigen und einer stromabwärtigen Seite des Ventils (13) kommuniziert.

2. Fluidregelventil (28) nach Anspruch 1, **dadurch gekennzeichnet, dass** der ringförmige konvexe Teil (32, 34, 36) so konfiguriert ist, dass ein Zustand des Kontakts zwischen dem Ventil (13) und dem Ventilsitz (26) in Form einer Linie vorliegt.

3. Fluidregelventil (28) nach einem der vorhergehenden Ansprüche, **dadurch gekennzeichnet, dass** der konkave Teil (31) dahingehend konfiguriert ist, als ein Federsitz für die Feder (19) verwendet zu werden.

## Revendications

1. Soupape de commande de fluide (28) comprenant une soupape (13) supportée dans un état dans lequel elle est sollicitée par un ressort (19) contre une pointe d'une tige de soupape (18) qui se déplace en alternance d'avant en arrière dans une direction perpendiculaire à un siège de soupape (26),
une portion annulaire convexe s'étendant en pente douce (32, 34, 36) étant prévue sur la portion de la soupape (13) qui repose contre le siège de soupape (26), de manière à minimiser la longueur d'une portion étranglée d'un passage de fluide (25) défini par la soupape (13) et le siège de soupape (26), et
une portion concave s'étendant en pente douce (31) étant formée sur une partie de la soupape (13) qui repose contre le siège de soupape (26), de manière à élargir une zone qui reçoit la pression d'un écoulement de fluide à travers la soupape de commande de fluide (28), et
**caractérisée en ce que**
de multiples rainures (38) irradiant vers l'extérieur sont formées dans la portion annulaire convexe (32, 34, 36) à intervalles prédéterminés de manière à former un passage qui communique entre les côtés amont et aval de la soupape (13).

2. Soupape de commande de fluide (28) selon la revendication 1, **caractérisée en ce que** la portion annulaire convexe (32, 34, 36) est configurée de telle sorte qu'un état de contact entre la soupape (13) et le siège de soupape (26) soit sous forme linéaire.

3. Soupape de commande de fluide (28) selon l'une quelconque des revendications précédentes, **caractérisée en ce que** la portion concave (31) est configurée pour être utilisée en tant que siège de ressort pour le ressort (19).
